# EUROPÄISCHE PATENTSCHRIFT

(11) **EP 0 683 195 B1**
(45) Veröffentlichungstag und Bekanntmachung des Hinweises auf die Patenterteilung: **08.04.1998**
(21) Anmeldenummer: 95102615.2
(22) Anmeldetag: 24.02.1995
(51) Int. Cl.: C08J 5/12, C08K 5/3415

(54) **Verfahren zur Herstellung von Verbundgegenständen aus Polyestern und Elastomeren**
Process for preparing composite articles from polyesters and rubbers
Procédé pour préparer des articles composites à base de polyesters et de caoutchouc

(30) Priorität: 30.04.1994 DE 4415302
(43) Veröffentlichungstag der Anmeldung: 22.11.1995
(73) Patentinhaber: HÜLS AKTIENGESELLSCHAFT, 45764 Marl (DE)
(72) Erfinder: Schmidt, Friedrich Georg, Dr., D-45721 Haltern (DE); Heuer, Horst, D-45721 Haltern (DE)

(56) Entgegenhaltungen:
- EP-A- 0 142 930
- EP-A- 0 230 344
- EP-A- 0 375 867
- US-A- 3 972 973
- DATABASE WPI Derwent Publications Ltd., London, GB; AN 94-089463[11] & JP-A-6 041 405 (JAPAN SYNTHETIC RUBBER CO. LTD. ET AL)

## Beschreibung

Die vorliegende Erfindung betrifft ein Verfahren zur Herstellung von Verbundgegenständen aus mindestens einer harten und mindestens einer weichen Komponente, wobei die harte Komponente auf einem thermoplastischen Polyester basiert und die weiche Komponente ein Vulkanisat ist. Die Erfindung betrifft weiterhin die nach diesem Verfahren erhaltenen Gegenstände.

Häufig kann ein einziger Werkstoff nicht alle Eigenschaften beitragen, die von einem Gegenstand verlangt werden. Solche unvereinbaren Eigenschaftskombinationen sind z. B. gleichzeitig hohe Festigkeit und Gummielastizität oder hohe Härte und Steifheit auf einer und Rutschfestigkeit auf der anderen Seite.

Um Bauteile mit Eigenschaften auszurüsten, die ein einziger Werkstoff nicht beitragen kann, setzt man sie aus Teilen verschiedener Werkstoffe zusammen. Für die Funktionstüchtigkeit derartiger Gegenstände ist häufig eine feste Haftung zwischen den Teilen aus verschiedenen Werkstoffen eine notwendige Voraussetzung.

Die technische Aufgabe, Kautschuke und Thermoplaste fest miteinander zu verbinden, ist alt und bisher auf verschiedene, insgesamt nicht befriedigende Arten gelöst.

Verbundwerkstoffe aus thermoplastisch steifen und gummielastischen Formstoffen werden üblicherweise durch Kleben, Verschrauben, Nieten, mechanisches Verkrallen oder unter Verwendung eines Haftvermittlers zusammengefügt. In neuerer Zeit sind interessante Verfahren zur Herstellung eines Verbundes zwischen Formmassen auf Basis von Polyphenylenethern (PPE) und bestimmten, mit Schwefel bzw. Peroxid vulkanisierbaren Kautschuken entwickelt worden (vgl. EP-A-0 196 407 und EP-A-0 315 749).

Die hierbei erzielten Haftfestigkeitswerte sind beachtlich. Nachdem Verbundwerkstoffe der soeben geschilderten Art grundsätzlich herstellbar sind, möchte man aber in der Lage sein, auch Verbundwerkstoffe herzustellen, deren thermoplastische Komponente neben einer hohen Wärmeformbeständigkeit gleichzeitig eine gute Lösemittelbeständigkeit, Stabilität bei Bewitterung sowie ein ausgezeichnetes Gleitreibungsverhalten aufweist.

Obwohl bekannt ist, daß die aus den angeführten Anmeldungen bekannten Verfahren an bestimmte kritische Parameter geknüpft sind, könnte man grundsätzlich daran denken, den Polyphenylenether durch andere Thermoplasten zu ersetzen, die den genannten Anforderungen besser gerecht werden. Es hat sich jedoch gezeigt, daß sich beispielsweise mit Polyestern, die bekanntlich den oben genannten Anforderungen gerecht werden, unter den als wesentlich erkannten Verfahrensbedingungen keine ausreichenden Haftungswerte erzielen lassen (siehe Vergleichsversuche). Es erschien daher nicht möglich, Verbunde zwischen thermoplastischen Polyestern und Kautschuken herzustellen.

In der EP-A-0 375 867 wird ein Verfahren zur Herstellung solcher Verbunde angegeben, bei denen der Thermoplastanteil zu mindestens 30 % aus einem Umsetzungsprodukt aus einem thermoplastischen Polyester und einem Polyisocyanat besteht. Diese Umsetzungsprodukte haben den Nachteil, daß sie bei hinreichend hoher Konzentration an Polyisocyanat nur in einem sehr engen Verarbeitungsfenster spritzgegossen oder extrudiert werden können.

In der deutschen Anmeldung P 43 31 995.5 wird ein Verfahren beschrieben, bei dem Polyester mit einem nicht beeinträchtigten Verarbeitungsverhalten in einem Verbund mit Kautschuken eingesetzt werden können. Dieses besteht darin, daß man eine harte Komponente auf Basis eines thermoplastischen Polyesters verwendet, der aliphatische Doppelbindungen enthält, und bei der weichen Komponente von einer Kautschukzusammensetzung ausgeht, die im Kontakt mit der harten Komponente unter üblichen Vulkanisationsbedingungen vulkanisiert wird und ein bestimmtes funktionelles Silan enthält.

Es wurde jetzt überraschend ein weiteres Verfahren gefunden, mit dem Polyester mit einem nicht beeinträchtigten Verarbeitungsverhalten in einem Verbund mit Kautschuken eingesetzt werden können. Dieses besteht darin, daß man eine harte Komponente auf Basis eines thermoplastischen Polyesters verwendet und bei der weichen Komponente von einer Kautschukzusammensetzung ausgeht, die im Kontakt mit der harten Komponente unter üblichen Vulkanisationsbedingungen vulkanisiert wird und folgende Komponenten enthält:
I. 100 Gew.-Teile eines Kautschuks,
II. 0 bis 300 Gew.-Teile Füllstoffe,
III. 1 bis 10 Gew.-Teile peroxidische Vulkanisationsmittel,
IV. 0 bis 4 Gew.-Teile Vulkanisationsaktivatoren sowie
V. 0 bis 150 Gew.-Teile Weichmacher,
dadurch gekennzeichnet, daß
a) wahlweise die harte und/oder die weiche Komponente zusätzlich 0,5 bis 12 Gew.-Teile eines di- oder polyfunktionellen Maleinimids der allgemeinen Formel 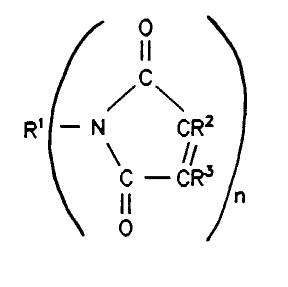 enthält,
   wobei R ein beliebiger zwei- oder mehrwertiger Rest oder eine direkte Bindung sein kann, während R² und R³, unabhängig voneinander, Wasserstoff, Alkyl, Cycloalkyl oder Aryl mit jeweils maximal 20 C-Atomen sein können; n steht für eine Zahl größer oder gleich 2, vorzugsweise 2 bis 4, und
b) im Falle, daß die harte Komponente kein di- oder polyfunktionelles Maleinimid enthält, der Kautschuk Carboxyl- oder Säureanhydridgruppen besitzt.

Über den hier wirksamen Bindungsmechanismus zwischen Polyester und Vulkanisat liegen noch keine gesicherten Erkenntnisse vor.

Im folgenden sollen die einzelnen Bestandteile der harten und der weichen Komponente näher erläutert werden.

Die harte Komponente auf Basis von Polyester kann ein Polyester, eine Polyesterformmasse, ein Polyesterblend oder ein Faserverbundwerkstoff mit Polyestermatrix sein.

Hierbei wird der thermoplastische Polyester in bekannter Weise durch Umesterung bzw. Veresterung von aromatischen Dicarbonsäuren mit 8 bis 14 C-Atomen bzw. deren Estern mit geeigneten Diolen und anschließender Polykondensation hergestellt [vgl. "Polymer Chemistry", Interscience Publ., New York, 1961, S. 111 - 127; Kunststoffhandbuch, Band VIII, C. Hanser Verlag, München, 1973 und Journal of Polymer Science, Part Al, 4, Seiten 1851 - 1859 (1966)].

Geeignete aromatische Dicarbonsäuren sind z. B. Phthalsäure, Iso- und Terephthalsäure bzw. deren Ester. Die aromatischen Dicarbonsäuren können teilweise durch aliphatische und/oder cycloaliphatische Dicarbonsäuren mit bis zu 12 C-Atomen ersetzt sein. Beispielhaft seien Cyclohexan-1,4-dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure, Tetrahydroisophthalsäure und Tetrahydroterephthalsäure als ungesättigte Dicarbonsäuren genannt.

Als Diolkomponente eignen sich beispielsweise
- Diole der allgemeinen Formel HO-(CH₂)ₙ-OH mit n = 2 bis 12, wie z. B. Ethylenglykol, Propandiol-(1,3), Butandiol-(1,4) und Hexandiol-(1,6),
- Neopentylglykol,
- 1,4-Cyclohexandimethanol,
- ungesättigte Diole, wie z. B. Butendiol-(1,4).

Ein Teil dieser Diole kann durch ein Poly(oxyalkylen)diol mit einem Molekulargewicht bis 3 000, wie z. B. Poly(oxyethylen)diol oder Poly(oxytetramethylen)diol, oder durch verzweigte Alkylendiole, wie z. B. 2-Methyl-1,4-butandiol, ersetzt sein.

Die erfindungsgemäß eingesetzten Polyester weisen sinnvollerweise eine Viskositätszahl J, gemessen nach DIN 53 728 bei 25 °C an einer Lösung in Phenol/1,2-Dichlorbenzol (50 : 50, w/w) mit einer Konzentration von 5 g/l, im Bereich von 80 bis 240 cm³/g auf.

In einer bevorzugten Ausführungsform basiert die Dicarbonsäurekomponente dieses Polyesters auf Terephthalsäure.

Besonders bevorzugt werden als Polyester Poly(ethylenterephthalat) und Poly(butylenterephthalat) eingesetzt.

Die Wirkung des di- oder polyfunktionellen Maleinimids kann noch in gewissem Maße gesteigert werden, wenn der Polyester aliphatische Doppelbindungen enthält. So verwendet man in einer weiteren besonders bevorzugten Ausführungsform Polyester mit einer Dicarbonsäurekomponente auf Basis von Terephthalsäure und einer Diolkomponente, die zu 0 bis 99,9 Mol-% aus Butandiol-(1,4) und zu 0,1 bis 100 Mol-% aus Butendiol-(1,4) besteht. Insbesondere besteht die Diolkomponente aus 50 bis 99 Mol-% Butandiol-(1,4) und 1 bis 50 Mol-% Butendiol-(1,4).

Selbstverständlich kann der eventuell gewünschte Doppelbindungsgehalt des Polyesters dadurch eingestellt werden, daß man eine Mischung eines doppelbindungshaltigen und beispielsweise eines doppelbindungsfreien Polyesters verwendet.

Polyesterformmassen im Sinne dieser Erfindung sind dem Stand der Technik entsprechende Aufbereitungen von Polyestern, die zur Verbesserung der Verarbeitungseigenschaften oder zur Modifizierung der Gebrauchseigenschaften vorgenommen wurden. Polyesterformmassen enthalten z. B. Stabilisatoren, Gleitmittel, Füllstoffe wie etwa Ruß, Graphit, Metallflitter, Titandioxid und Zinksulfid, Verstärkungsmittel wie etwa Glas-, Kohle-, Aramid- oder Metallfasern, Weichmacher, Farbstoffe und/oder Flammschutzmittel. Der Anteil der Verstärkungsmittel in den Formmassen kann bis zu 50 Gew.-%, der der Flammschutzmittel bis zu 20 Gew.-% und der aller übrigen Zusatzstoffe insgesamt bis zu 10 %, jeweils bezogen auf die gesamte Formmasse, betragen.

Polyesterblends im Sinne dieser Erfindung sind Formmassen, die aus Polyestern und anderen Polymeren sowie den bei den Polyesterformmassen gebräuchlichen Additiven zusammengesetzt sind. Die Polymerbestandteile können ineinander löslich sein oder der eine Polymerbestandteil in dem anderen dispers verteilt sein, oder beide können miteinander interpenetrierende Netzwerke bilden.

Im Rahmen der vorliegenden Erfindung kann prinzipiell jedes bekannte Polyesterblend verwendet werden. Als Beispiele seien genannt: PBT/PC- oder PET/PC-Blends, schlagzähmodifizierte Polyester, die als Schlagzähkomponente etwa MSA- oder glycidylmethacrylatmodifizierte Kautschuke enthalten, Polyester/Polyamid-Blends, -Blends, Blends aus Polyestern und Polyolefinen sowie Blends aus Polyestern und PMMA, PMMI, ABS, Epoxyharzen oder Blockcopolyetherester-Elastomeren. Beschrieben sind derartige Systeme beispielsweise in folgenden Publikationen: Polymer Blends, Ed.: E. Martuscelli, R. Palumbo und M. Kryszewski, Plenum Press, New York, 1980; Polymer Alloys III, Ed.: D. Klempner und K. C. Frisch, Plenum Press, New York, 1983; WO-A-87/00850; EP-A-0 037 547; EP-A-O 276 327 sowie H. Saechtling, Kunststoff-Taschenbuch, 25. Auflage, C. Hanser Verlag, München, Wien, 1992.

Der Polyesteranteil in den Polyesterblends sollte hierbei, bezogen auf die Summe aller polymeren Komponenten, mindestens 30 Gew.-% betragen.

Als Faserverbundwerkstoffe mit Polyestermatrix sollen Werkstoffe verstanden werden, die aus ungeschnittenen Verstärkungsfasern oder Geweben daraus einerseits und einer Matrix aus Polyestern, Polyesterformmassen oder Polyesterblends andererseits zusammengesetzt sind.

Faserverbundwerkstoffe mit einer Matrix aus Polyestern, Polyesterformmassen oder Polyesterblends können auf verschiedene Weise hergestellt werden; beispielsweise können mit Polyestern imprägnierte Verstärkungsfasern oder Verstärkungsgewebe - sogenannte Prepregs - durch Druck und Temperatur zu Laminatplatten konsolidiert werden. Es ist auch möglich, hybride Garne aus Polyesterfasern und Verstärkungsfasern, oder Filme aus den genannten Thermoplasten und Gewebe aus Verstärkungsfasern unter Druck und Temperatur zu Verbundwerkstoffen zu verarbeiten. Geeignete Verstärkungsfasern sind z. B. Glasfasern, Kohlenstoffasern und Aramidfasern.

Die im erfindungsgemäßen Verfahren eingesetzte Kautschukzusammensetzung enthält unter den angegebenen Umständen einen Carboxyl- bzw. Anhydridgruppen enthaltenden Kautschuk, der beispielsweise in bekannter Weise durch Carboxylierung mit ungesättigten Säuren oder Säurederivaten, wie z. B. Maleinsäure oder Maleinsäureanhydrid, hergestellt wird (vgl. z. B. US-PS 40 10 223). Es ist auch möglich, diese Kautschuke durch Copolymerisation mit ungesättigten Säuren wie z. B. Acrylsäure herzustellen. Grundsätzlich sind alle Carboxyl- oder Anhydridgruppen enthaltenden Kautschuke geeignet, die sich auf bekannte Weise herstellen lassen.

Eine generelle Untergrenze für den Carboxylgehalt oder die Säurezahl läßt sich nicht angeben, da diese je nach verwendetem Kautschuktyp und je nach Art und Menge des zugesetzten di- oder polyfunktionellen Maleinimids unterschiedlich ist. Als Untergrenze soll daher der Wert angesehen werden, bei dem sich die erfindungsgemäße Wirkung gerade noch einstellt. Dieser Wert läßt sich durch wenige Routineversuche ermitteln; die erfindungsgemäßen Beispiele 30 bis 32 können hierbei als Orientierungshilfe verwendet werden.

Der für die weiche Komponente verwendete Kautschuk kann beispielsweise ein EP(D)M-Kautschuk, ein SB-Kautschuk (als E-SBR oder L-SBR), BR, NR, IR, IIR, CIIR, BIIR, NBR, CR, ein styrolhaltiges Blockcopolymer und/oder ein Polyalkenylen sein.

EP(D)M-Kautschuke sind Kautschuke, die in bekannter Weise durch Polymerisation eines Gemisches aus Ethylen und Propylen und gegebenenfalls eines Diens in Gegenwart eines Ziegler-Natta-Katalysators hergestellt werden.

Der EPDM-Kautschuk wird durch Polymerisation eines Gemisches aus
mehr als 25 Gew.-% Ethylen,
mehr als 25 Gew.-% Propylen und
bis 10 Gew.-%, insbesondere 1 bis 3 Gew.-% eines vorzugsweise nicht konjugierten Diens wie Bicyclo(2.2.1)-heptadien, Hexadien-1,4, Dicyclopentadien und insbesondere 5-Ethylidennorbornen
hergestellt.

Beim SB-Kautschuk kann es sich sowohl um E- als auch um L-SBR mit einem Styrolanteil bis maximal etwa 40 Gewichtsprozent handeln.

E-SBR wird in bekannter Weise durch Polymerisation in Emulsion hergestellt, während L-SBR durch Polymerisation in Lösung hergestellt wird.

Butadienkautschuk (BR) kann in bekannter Weise beispielsweise durch Polymerisation mit Hilfe von Li- oder Co-Katalysatoren hergestellt werden. Die Verknüpfungsart hat hierbei keinen erkennbaren Einfluß auf die Eignung.

Naturkautschuk (NR) wird üblicherweise in der cis-1,4-Konfiguration verwendet. Jedoch ist im Rahmen dieser Erfindung auch die trans-1,4-Konfiguration geeignet.

Isoprenkautschuk (IR) kann unabhängig davon verwendet werden, ob er z. B. mit Ti- oder Li-Katalysatoren hergestellt wurde. Der cis-1,4/trans-1,4-bzw. 1,2- und 3,4-Gehalt hat keinen erkennbaren Einfluß auf die Haftungseigenschaften.

Isobuten-Isopren-Kautschuk (IIR) kann als solcher oder in halogenierter Form (CIIR bzw. BIIR) verwendet werden.

Nitrilkautschuk (NBR) wird durch Copolymerisation von Butadien und Acrylnitril in Masseverhältnissen von ca. 51 : 48 bis 82 : 18 gewonnen. Seine Herstellung erfolgt praktisch ausschließlich in wäßriger Emulsion. Die dabei resultierenden Emulsionen werden für den Einsatz im Rahmen dieser Erfindung zum Festkautschuk aufgearbeitet.

Chloroprenkautschuk (CR) wird üblicherweise durch radikalische Emulsionspolymerisation hergestellt. Dabei wird das Monomere in unterschiedlichen Strukturen in das Polymer eingebaut. Der cis-1,4/trans-1,4- bzw. 1,2- und 3,4-Gehalt bzw. der Anteil an Kopf/Kopf- und Kopf/Schwanz-Verknüpfung hat keinen erkennbaren Einfluß auf die Haftungseigenschaften.

Als styrolhaltiges Blockcopolymer können alle bekannten Typen auf Basis von Styrol/Butadien oder Styrol/Isopren verwendet werden. Beispiele hierfür sind SB, SBS und SIS sowie entsprechende Typen, die eine größere Anzahl von Blöcken enthalten. Die Copolymeren können hierbei linear oder verzweigt sein. Darüber hinaus kann die Weichphase hydriert sein; entsprechende Blockcopolymere werden auch als Styrol-Ethylen-Butylen-Styrol-Blockcopolymere (SEBS) bezeichnet.

Polyalkenylene werden durch ringöffnende bzw. ringerweiternde Polymerisation von Cycloalkenen dargestellt [siehe K. J. Ivin, T. Saegusa, "Ringopening Polymerisation", Vol. 1, Elsevier Appl. Sci. Publishers, London, insbesondere Seiten 121 bis 183 (1984)]. Hiervon werden Polyoctenylene bevorzugt (vgl. A. Dräxler, Kautschuk + Gummi, Kunststoff 1981, Seiten 185 bis 190). Polyoctenylene mit unterschiedlichen Anteilen an cis- und trans-Doppelbindungen sowie unterschiedlichen Molekulargewichten sind nach literaturbekannten Methoden erhältlich.

Im Rahmen dieser Erfindung wird bevorzugt ein Kautschuk verwendet, der aus 30 bis 100 Gew.-Teilen eines EP(D)M-Kautschuks und 70 bis 0 Gew.-Teilen anderer Kautschuke besteht.

Geeignete carboxylierte EPM-Kautschuke werden z. B. von der Fa. Exxon Chemical GmbH, Köln unter der Bezeichnung EXXELOR VA 1801, VA 1803 oder VA 1806 hergestellt.

Ein geeigneter carboxylierter EPDM-Kautschuk ist z. B. maleinsäureanhydrid-modifiziertes BUNA HÜLS AP der Firma Hüls AG, Marl (Versuchsprodukt X 4496).

Geeignete mit Carboxylgruppen versehene NBR-Kautschuke werden z. B. von Goodyear Tire & Rubber Company, Akron, Ohio, USA, unter der Bezeichnung CHEMIGUM® NX 775 und von Zeon Europe GmbH, Düsseldorf, Deutschland unter den Bezeichnungen NIPOL 1472 und NIPOL 1072 vertrieben.

Im übrigen ist die Herstellung funktionalisierter Kautschuke, beispielsweise durch Kneten des Kautschuks mit Maleinsäureanhydrid bei höherer Temperatur und gegebenenfalls in Anwesenheit von Radikalstartern, Stand der Technik.

Die erfindungsgemäß verwendbaren funktionalisierten Kautschuke müssen jedoch nicht unbedingt per se eingesetzt werden. Sie können auch während der Vulkanisation in situ hergestellt werden. Zu diesem Zweck wird ein handelsüblicher, unfunktionalisierter Kautschuk zusammen mit einer Verbindung eingesetzt, die mindestens eine C-C-Doppelbindung und/oder C-C-Dreifachbindung und mindestens eine Carboxyl- oder Anhydridgruppe enthält. Beispielsweise können hier Maleinsäureanhydrid, Maleinsäuremonoalkylester, Fumarsäure, Tetrahydrophthalsäureanhydrid, Acrylsäure, Methacrylsäure, Itaconsäure, Sorbinsäure, Ölsäure, Linolsäure, Propiolsäure, Phenylpropiolsäure, Addukte von Maleinsäureanhydrid mit z. B. Linolsäure, Addukte von Maleinsäureanhydrid mit niedermolekularem Polybutadien oder entsprechende Addukte mit niedermolekularem Polyoctenamer verwendet werden. Hierbei kann jeder beliebige Kautschuk eingesetzt werden.

Eine weitere Ausführungsform besteht darin, daß man ein Gemisch aus einem funktionalisierten Kautschuk und einem unfunktionalisierten Kautschuk einsetzt.

Als Füllstoffe eignen sich alle Stoffe, die üblicherweise in Kautschuken eingesetzt werden, wie z. B. Ruß, Kieselsäure, Silikate, Calciumcarbonat, Zinkoxid und Talkum. Bei Verwendung hochaktiver Füllstoffe wird zum Erreichen einer Verbundhaftung eine erhöhte Menge der di- oder polyfunktionellen ungesättigten Verbindung benötigt.

Geeignete Weichmacher sind insbesondere naphthenische und/oder aliphatische Öle oder spezielle, in der Kautschuktechnologie übliche Weichmacher wie z. B. Polyalkoholfettsäureester oder Thioether in einer Menge von vorzugsweise bis zu 50 Gewichtsteilen, bezogen auf 100 Gewichtsteile Kautschuk.

Geeignete peroxidische Vulkanisationsmittel sind die dem Fachmann zur Vernetzung von Kautschuken bekannten Peroxide wie z. B. 2,5-Dimethyl-2,5bis(tert.-butylperoxy)-hexan, Dicumylperoxid, 4,4-Di-tert.-butylperoxy-n-butylvalerat, 1,1-Di-tert.-butylperoxy-3,3,5-trimethyl-cyclohexan und Bis(tert.-butylperoxyisopropyl)benzol. Einzelheiten zum Einsatz von peroxidischen Vulkanisationsmitteln sind der Firmenbroschüre "Rubbery Chemical-Crosslinking-Peroxides" der Akzo-Chemie (Erscheinungsdatum: April 1985) zu entnehmen.

Als Vulkanisationsaktivatoren eignen sich beispielsweise Triallylcyanurat (TAC) und Acrylate wie Ethylenglykoldimethacrylat (EDMA), Butandiol-dimethacrylat (BDMA) und Trimethylolpropantrimethacrylat (TRIM). Bevorzugt werden TAC, BDMA und/oder EDMA.

Die Kautschukzusammensetzungen können darüber hinaus weitere Zusätze enthalten, wie z. B. Vulkanisationsverzögerer, Alterungsschutzmittel, Verarbeitungshilfsmittel, Entformungsmittel und/oder Treibmittel. In der Regel machen diese weiteren Zusätze, bezogen auf 100 Gew.-Teile Kautschuk, maximal 50 Gew.-Teile aus. Die Herstellung solcher Compounds wird beispielsweise von F.W. Barrow in "Rubber Compounding", erschienen 1988 bei Marcel Dekker Inc., New York und Basel, oder bei W. Kleemann in "Mischungen für die Elastverarbeitung", erschienen 1982 (VEB Deutscher Verlag für Grundstoffindustrie), beschrieben.

Das di- oder polyfunktionelle Maleinimid bzw. Maleimid kann z. B. 1,3-Phenylen-bismaleimid, 1,4-Phenylen-bismaleimid, 3-Methyl-1,4-phenylenbismaleimid, 5-Methyl-1,3-Phenylen-bismaleimid, 4,4'-(N,N'-Bismaleimido)-diphenylmethan, 2,4-Bismaleimidotoluol, 3,3'-(N,N'-Bismaleimido)-diphenylmethan, 3,3'-(N,N'-Bismaleimido)-diphenylsulfon, 4,4'-(N,N'-Bismaleimido)-diphenylsulfon, 1,2-Ethylen-bismaleimid, 1,3-Propylen-bismaleimid, 1,4-Butylen-bismaleimid, 1,10-Decen-bismaleimid, 1,12-Dodecen-bismaleimid u. ä. sein.

Bevorzugt sind Bismaleinimide mit einem aromatischen Rest R¹, besonders bevorzugt sind 1,3-Phenylen-bismaleimid, 2,4-Bismaleimidotoluol bzw. 4,4'-(N,N'-Bismaleimido)-diphenylmethan.

Von diesen Verbindungen können 0,5 bis 12 Gewichtsteile eingesetzt werden, bevorzugt werden 1 bis 8 Gewichtsteile, besonders bevorzugt 1,25 bis 6 Gewichtsteile, bezogen jeweils auf 100 Gewichtsteile Kautschuk oder Polyester.

Das di- oder polyfunktionelle Maleinimid kann durch übliche Schmelzemischung in die Thermoplastkomponente eingearbeitet werden, beispielsweise mit Hilfe eines Zweiwellen- oder Buss-Co-Kneters. Es kann aber auch auf bekannte Weise in die Kautschukzusammensetzung eingemischt werden. In einer weiteren möglichen Ausführungsform wird es sowohl in die Thermoplastkomponente als auch in die Kautschukzusammensetzung eingearbeitet.

Der Verbund aus der harten Komponente auf Polyesterbasis und der elastomeren Komponente wird durch Vulkanisation des Kautschuk-Compounds im Kontakt mit der harten Komponente hergestellt.

Die Gegenstände aus den Polyestern, Polyesterformmassen oder Polyesterblends einerseits und Kautschuk-Compounds andererseits können hierbei einstufig oder zweistufig hergestellt werden. Gegenstände aus Faserverbundwerkstoffen und Kautschuk-Compounds werden zweistufig hergestellt.

Beim zweistufigen Prozeß wird zunächst das steife Formteil beispielsweise durch Spritzgießen, Extrudieren oder Konsolidieren von Prepregs hergestellt und in einem zweiten Schritt mit dem ggf. vorgeformten Kautschuk-Compound beaufschlagt und den Vulkanisationsbedingungen des Kautschuks ausgesetzt. Das Beaufschlagen des steifen Formteils mit dem Kautschuk kann durch Pressen, Spritzgießen oder Extrudieren geschehen.

Beim zweistufigen Spritzgießverfahren geht man ähnlich vor wie bei der zweistufigen Herstellung von Zweifarbenspritzteilen. Als Einlegeteil verwendet man ein Formteil der genannten harten Werkstoffe. Zylinder und Schnecken der Spritzgießmaschine sind in bekannter Weise für die Kautschukverarbeitung ausgelegt und das Werkzeug auf Vulkanisationstemperatur beheizbar. Wenn äußere Entformungshilfsmittel verwendet werden, so ist dafür Sorge zu tragen, daß sie nicht in die Grenzschicht der Werkstoffe gelangen, da sie die Verbundhaftung beeinträchtigen können.

Beim Beaufschlagen und Ausvulkanisieren nach dem zweistufigen Extrusionsverfahren wird z. B. ein in der ersten Stufe hergestelltes Profil aus dem Thermoplasten, etwa ein Rohr, mit der Kautschukmasse ummantelt und gegebenenfalls unter Druck ausvulkanisiert. Entsprechend verfährt man mit Platten, Vliesen, Geweben und Seilen.

Beim einstufigen Spritzgießverfahren arbeitet man analog zum einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug wird auf die vorgegebene Vulkanisiertemperatur aufgeheizt, die unter der Erstarrungstemperatur des Polyesters, der Polyesterformmasse bzw. des Polyesterblends liegen sollte.

Die optimalen Vulkanisationsbedingungen hängen von der gewählten Kautschukmischung, insbesondere ihrem Vulkanisationssystem, und der Formteilgestaltung ab. Dabei kann man sich auf die bekannten Erfahrungswerte stützen, denn das zugesetzte di- oder polyfunktionelle Maleinimid beeinflußt die Reaktionsbedingungen nicht wesentlich.

Geeignete Massetemperaturen der Kautschukmischung im Zylinder liegen im allgemeinen im Bereich von 40 bis 80 °C, vorzugsweise von 60 bis 70 °C.

Geeignete Vulkanisationstemperaturen richten sich nach den Erweichungstemperaturen der Einlegeteile. Sie liegen im allgemeinen im Bereich von 140 bis 200 °C. Wenn die Erweichungsbereiche der Einlegeteile es zulassen, wählt man Temperaturen im oberen Bereich, z. B. zwischen 170 und 190 °C. Die Vulkanisationszeiten richten sich außer nach der Kautschukmischung nach den Vulkanisationstemperaturen und nach der Geometrie der Teile. Sie liegen im allgemeinen zwischen 30 s und 30 min; niedrigere Temperaturen und dickere Kautschukteile erfordern längere Zeiten.

Das erfindungsgemäße Verfahren sowie die damit hergestellten Verbunde zeichnen sich durch folgende Vorteile aus:
- Der Verbund ist vorzugsweise in wenigen Minuten hergestellt.
- Die im Verbundsystem eingesetzten Polyester besitzen eine hohe Wärmeformbeständigkeit, gute Lösemittelbeständigkeit, ein ausgezeichnetes Gleitreibungsverhalten sowie eine nur geringe Wasseraufnahme und sind auch im Außenbereich problemlos einsetzbar.
- Der Verbund ist so stark, daß es im Testfall zu einem Kohäsionsbruch im Gummi, nicht jedoch zu einer Trennung an der Phasengrenzfläche kommt.

Aus den Verbunden lassen sich beispielsweise folgende Gegenstände herstellen: gummibeschichtete Walzen, Flansche, Rohr- und Schlauchkupplungen, Dichtungsrahmen, stoß- und strahlungsabsorbierende Bauteile, Federelemente, Schwingungsdämpfer, verstärkte Gummiprofile, Transportbänder, Antriebsriemen, Andruckrollen für Video- und Audio-Band-Geräte, Dichtungen, insbesondere Wellendichtringe, Laufrollen, Kupplungs- und Bremsscheiben, Membranen, Kolben mit Dichtringen, verstärkte Faltenbälge, Pumpengehäuse und -klappen, polyesterverstärkte Gummi schläuche etc.

Im folgenden soll die Erfindung beispielhaft erläutert werden.

### Beispiele

Für die Herstellung der Kautschukmischung wurden folgende Materialien verwendet:

EXXELOR VA 1803, ein MSA-(1 %)-modifizierter EPM-Kautschuk der Fa. Exxon Chemical, Köln. EXXELOR VA 1806, ein MSA-(2 %)-modifizierter EPM-Kautschuk der Fa. Exxon Chemical, Köln. Die Eigenschaften der Produkte sind den technischen Informationen der Fa. Exxon Chemical zu entnehmen.

BUNA HÜLS AP 341, ein statistischer EPDM-Kautschuk (Hüls AG, D-45764 Marl) mit einer Mooney-Viskosität von ML (1 + 4) 100 °C = 70.

POLYVEST C 70, ein niedermolekulares, anhydridgruppentragendes Polymer (MSA-modifiziertes oligomeres Polybutadien), das als polymerer Kreideaktivator für EPDM-Mischungen angeboten wird. Nähere Informationen sind der Produktinformation "POLYVEST C 70" der Hüls AG, D-45764 Marl zu entnehmen.
- Durex 0:: Ruß der Fa. Degussa mit einem CTAB-Wert von 20 m²/g.
- Omyalite:: Calciumcarbonat der Fa. Omya, Köln, mit einer spez. Oberfläche von ca. 7,5 m²/g.
- Sillitin Z86:: Aluminium-Silikat der Fa. Hoffmann Mineral, Neuburg/Donau mit einer spez. Oberfläche von ungefähr 14 m²/g.
- ZnO RS:: Zinkoxid der Fa. Carl Arnsberger, Köln
- Vulkanox HS:: polymerisiertes 2,2,4-Trimethyl-1,2-dihydrochinolin der Fa. Rhein-Chemie, Rheinau
- BDMA:: Butandioldimethacrylat, 75 % auf Ca-Silikat der Fa. Lehmann & Voss
- Perkadox 14/40:: Bis-tert.-butylperoxy-isopropylbenzol, 40%ig auf Kreide und SiO₂ der Fa. Akzo Chemicals, Düren
- Sunpar 2280:: paraffinisch (73 %)-naphthenisch (23 %)-aromatisches (4 %) Öl der Fa. Sun Oil, Belgien
- Ondina Öl G17:: rein paraffinisches, medizinisches Weißöl nach DAB 9 der Fa. Deutsche Shell Chemie GmbH, Köln.
- Circosol 4240:: paraffinisch-naphthenisches Öl der Fa. Sun Oil, Belgien
- HVA 2:: m-Phenylen-bismaleinimid der Fa. DuPont, Wilmington, Delaware, USA
- MDAB:: Bismaleinimid der Fa. Deutsche Shell Chemie GmbH, Köln, mit der Formel 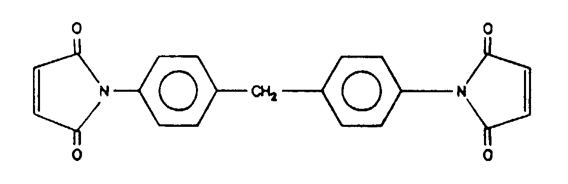
- TDAB:: Bismaleinimid der Fa. Deutsche Shell Chemie GmbH, Köln, mit der Formel

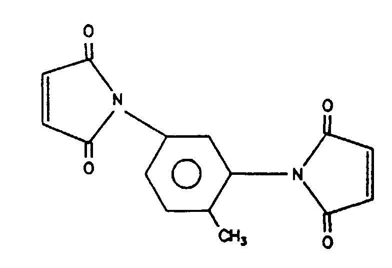

Als Polyestermaterialien wurden folgende Formmassen eingesetzt:

Typ A entspricht einem normalen Polybutylenterephthalat, VESTODUR 1000 der Hüls AG, D-45764 Marl mit einer Lösungsviskosität J von 108 cm³/g.

Typ B entspricht Polybutylenterephthalat mit einem copolykondensierten Anteil von 1 Mol-% 1,4-Buten-2-diol mit einer Lösungsviskosität J von 105 cm³/g.

Typ C entspricht Polybutylenterephthalat mit einem copolykondensierten Anteil von 5 Mol-% 1,4-Buten-2-diol mit einer Lösungsviskosität J von 106 cm³/g.

Typ D entspricht Polybutylenterephthalat mit einem copolykondensierten Anteil von 10 Mol-% 1,4-Buten-2-diol mit einer Lösungsviskosität J von 105 cm³/g.

Typ E entspricht Polybutylenterephthalat mit einem copolykondensierten Anteil von 20 Mol-% 1,4-Buten-2-diol mit einer Lösungsviskosität J von 106 cm³/g.

Typ F entspricht Polybutylenterephthalat mit einem Gewichtsanteil von 30 % Schnittglasfasern, VESTODUR GF30 der Hüls AG, Marl, mit einer Lösungsviskosität von 108 cm³/g.

Typ A1 entspricht einer Mischung aus 100 Gew.-Teilen des Typs A und 1 Gew.-Teil HVA 2, hergestellt bei 250 °C auf einem Zweiwellenkneter ZE 25 der Fa. Berstorff.

Typ A2 ist die entsprechend hergestellte Mischung aus 100 Gew.-Teilen des Typs A und 3 Gew.-Teilen HVA 2.

Typ A3 ist die entsprechend hergestellte Mischung aus 100 Gew.-Teilen des Typs A und 5 Gew.-Teilen HVA 2.

Typ C1 ist die entsprechend hergestellte Mischung aus 100 Gew.-Teilen des Typs C und 3 Gew.-Teilen HVA 2.

Typ D1 ist die entsprechend hergestellte Mischung aus 100 Gew.-Teilen des Typs D und 3 Gew.-Teilen HVA 2.

Typ E1 ist die entsprechend hergestellte Mischung aus 100 Gew.-Teilen des Typs E und 3 Gew.-Teilen HVA 2.

Typ F1 ist die entsprechend hergestellte Mischung aus 100 Gew.-Teilen des Typs F und 3 Gew.-Teilen HVA 2.

### Herstellung der Kautschukmischungen

Die Herstellung der einzelnen Kautschukmischungen I bis XXXXVII erfolgte in einem Batch-Labor-Meßkneter (Fa. Haake). Bei einer Starttemperatur von 60 °C und einer Drehzahl von 64 Upm wurde zunächst 28,57 g des Kautschuks plastifiziert. Innerhalb von etwa fünf Minuten wurde das in der Tabelle 1 angegebene Öl, der in der Tabelle 1 angegebene Füllstoff, 1,43 g ZnO RS und 0,57 g Vulkanox HS eingearbeitet und weitere drei Minuten homogenisiert. Während dieser Zeit stieg die Temperatur auf ca. 110 °C an. Diese Vormischung wurde anschließend ≥ 24 h bei Raumtemperatur gelagert. Anschließend wurden bei gleichen Bedingungen (60 °C Starttemperatur, 64 Upm) 1,71 g Perkadox 14/40, 0,43 g BDMA sowie gegebenenfalls das Bismaleinimid innerhalb von ca. vier Minuten homogen eingearbeitet. Dabei stieg die Temperatur der Mischung nicht über 130 °C an.

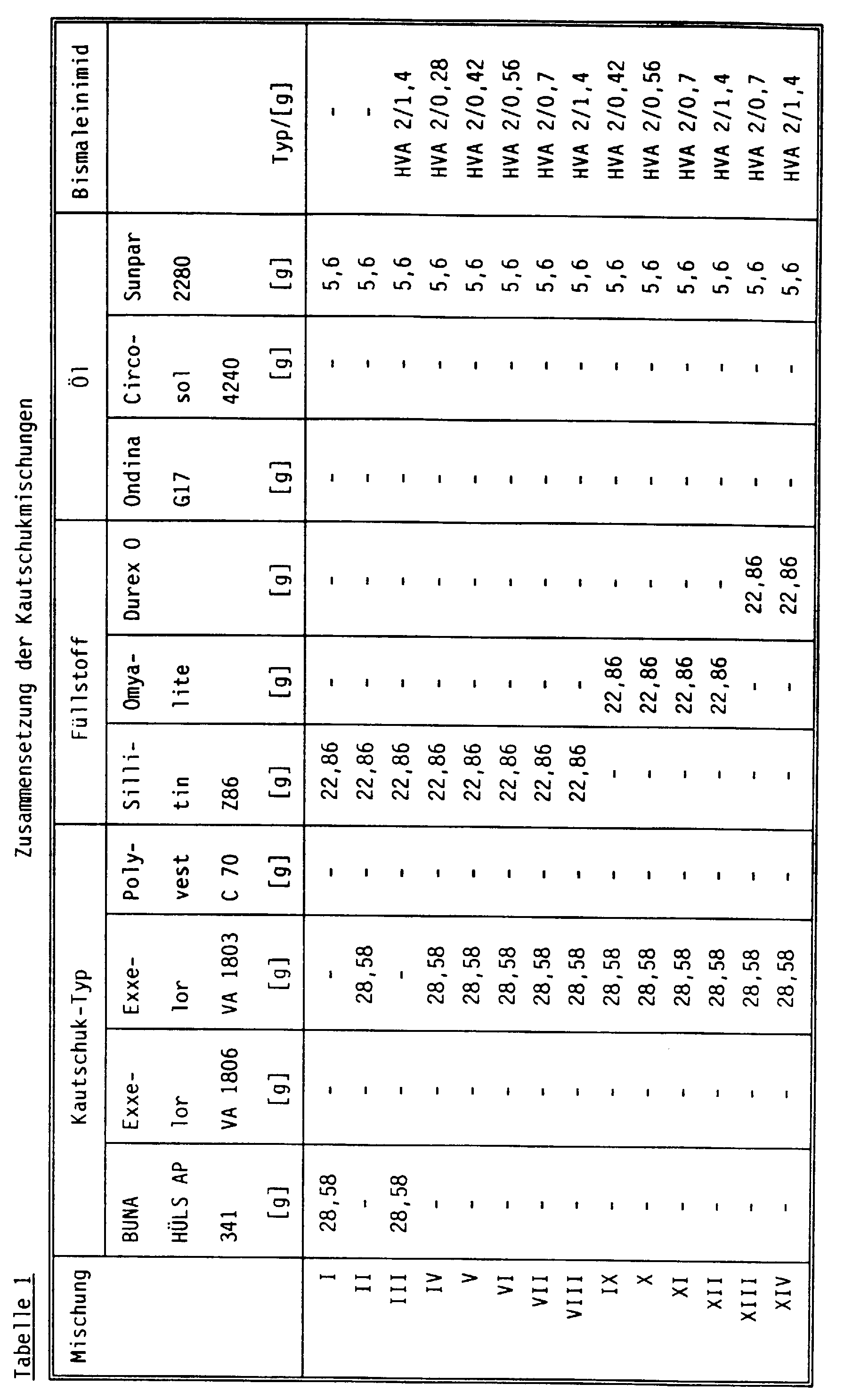

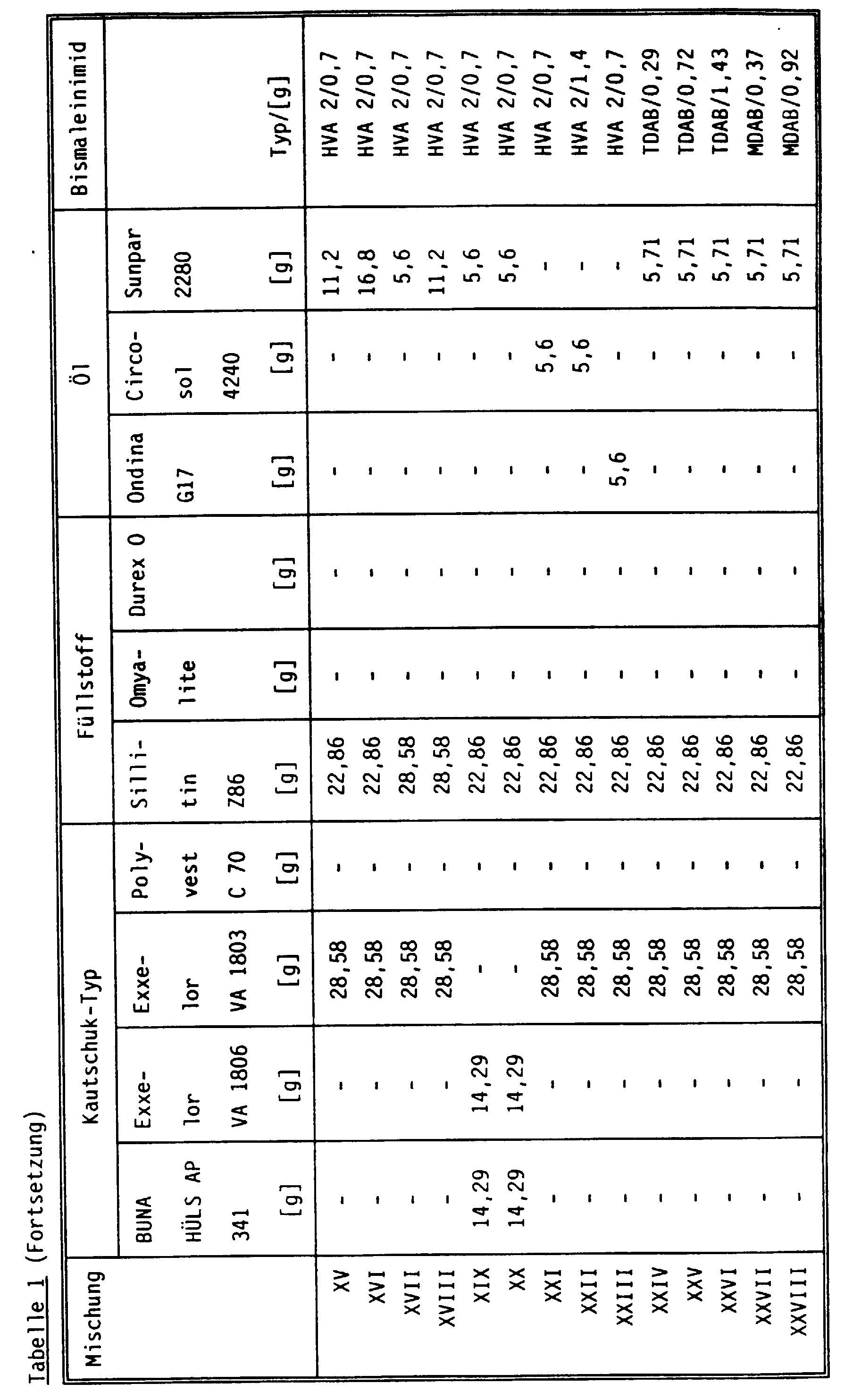

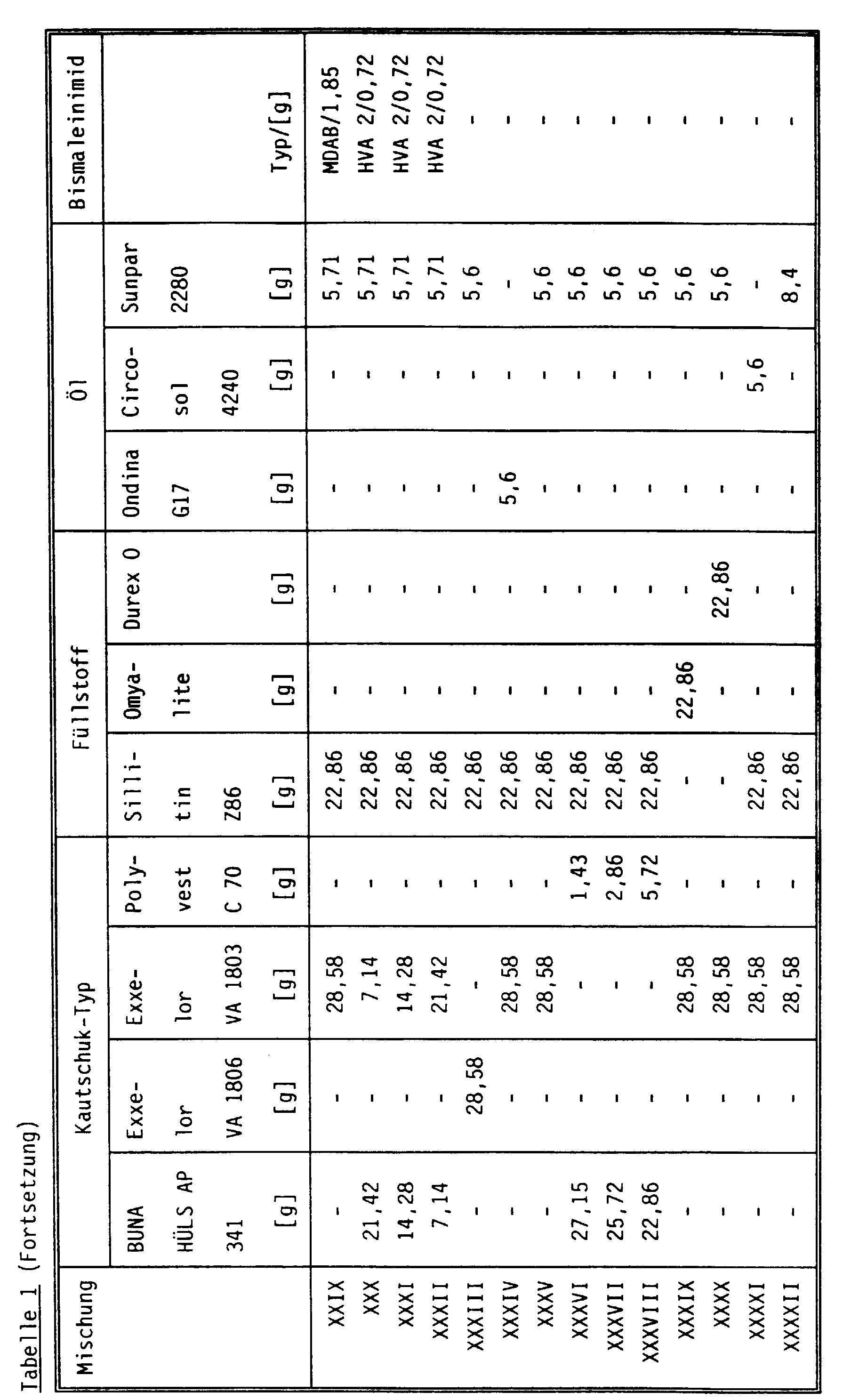

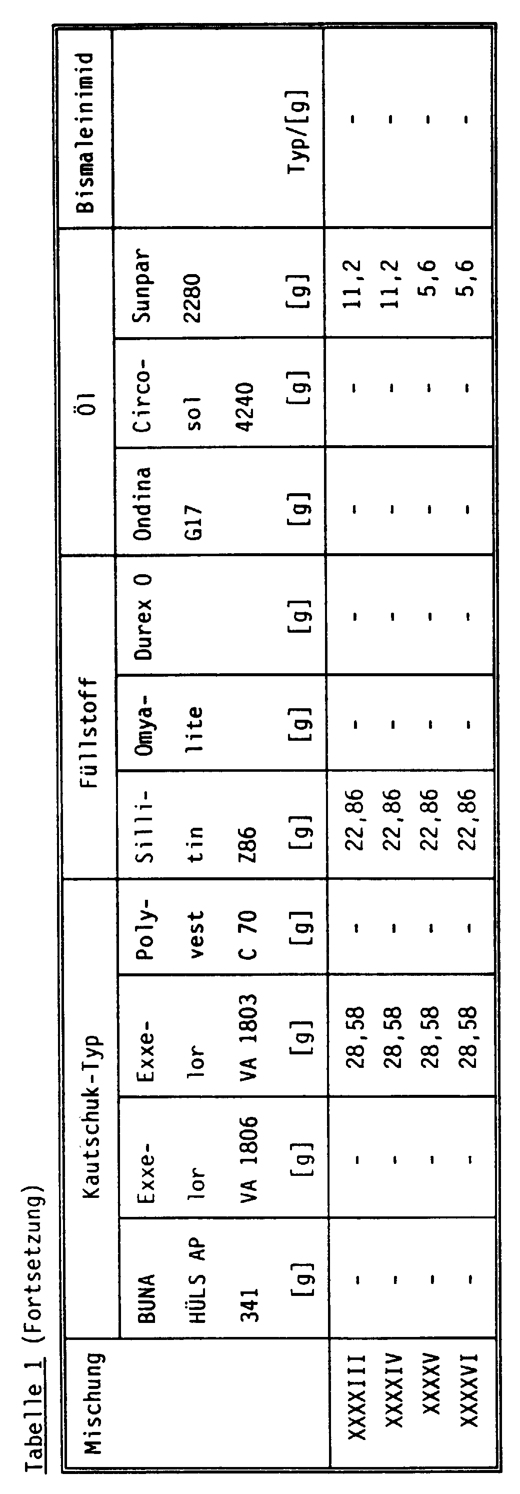

### Herstellung der Verbunde

Von den untersuchten Polyestern wurden Prüfkörper (100 x 100 x 4 mm) im Spritzgießverfahren bei einer Zylindertemperatur von 250 °C hergestellt. Anschließend wurde eine Platte in eine Form aus V2A-Stahl (100 x 100 x 8 mm) gelegt und mit einem 20 mm breiten Stück PTFE-Folie an einer Seite abgedeckt. Die Gesamtfläche wurde mit der zu prüfenden Kautschukmischung bedeckt. Die so präparierte Platte wurde in einer hydraulischen Presse (Schwabenthan - Polystat 200T) 20 Minuten bei 180 °C und 200 bar verpreßt.

### Prüfung der Verbundhaftung

Die Prüfung der Verbundhaftung zwischen Polyestermaterial und vulkanisiertem Kautschuk wurde mittels eines Schälversuches in Anlehnung an DIN 53 531 durchgeführt. Dabei wurde das Gummiteil, das durch die Teflonfolie bei der Vulkanisation vom Polyestermaterial getrennt gehalten wurde, so eingespannt, daß bei den Schälversuchen der Gummistreifen senkrecht zu der Thermoplastfläche abgezogen wurde. Die Ergebnisse sind in der Tabelle 2 wiedergegeben, wobei die Beurteilung folgendermaßen vorgenommen wurde:
H Haftung (Bruch im Kautschuk, d. h. kohäsiver Bruch; hohe Trennkraft)
- Nicht-Haftung (Bruch in der Grenzfläche zwischen Gummi und Polyester, d. h. adhäsiver Bruch; geringe bis sehr geringe Trennkraft)
t teilweise Haftung (Grenzbereich zwischen kohäsivem und adhäsivem Bruch; mittlere Trennkraft)

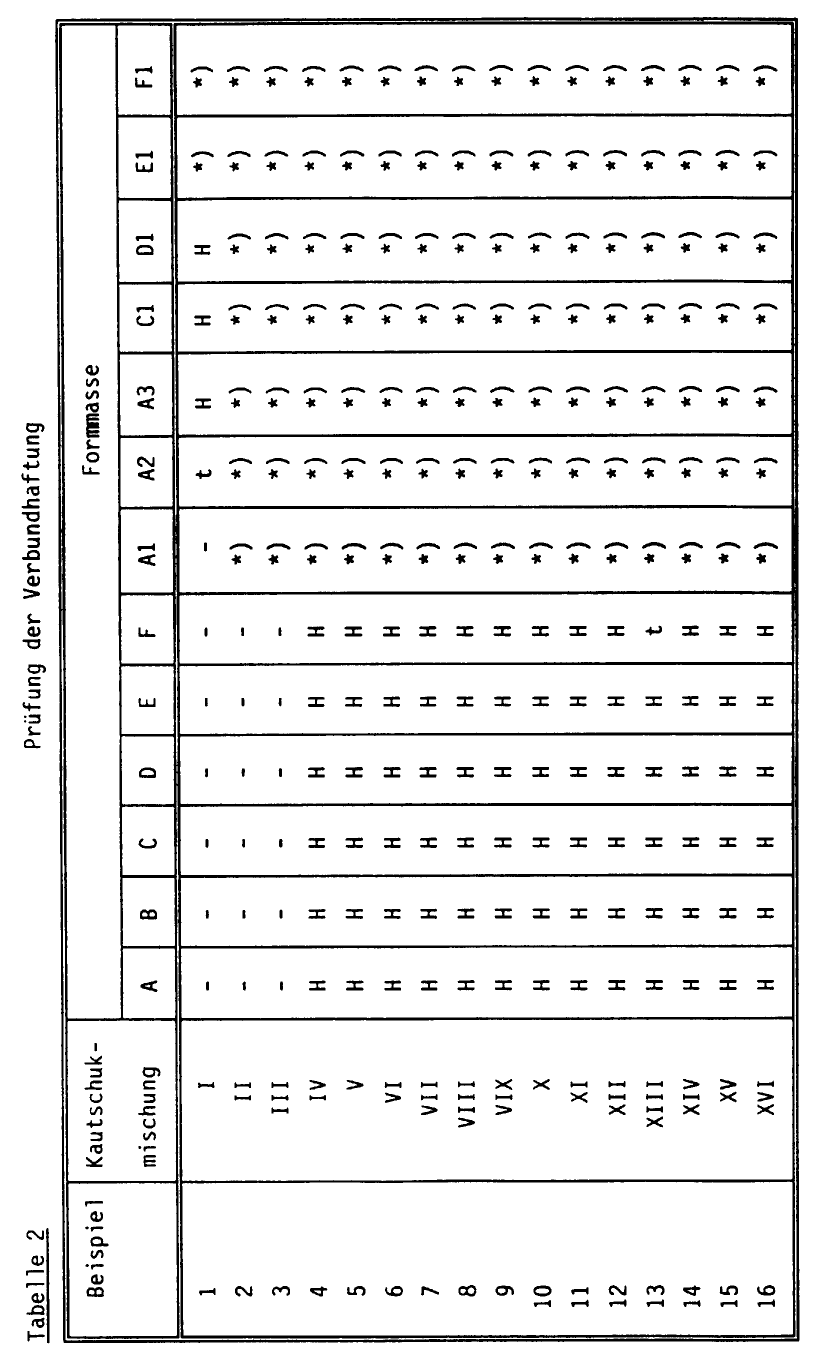

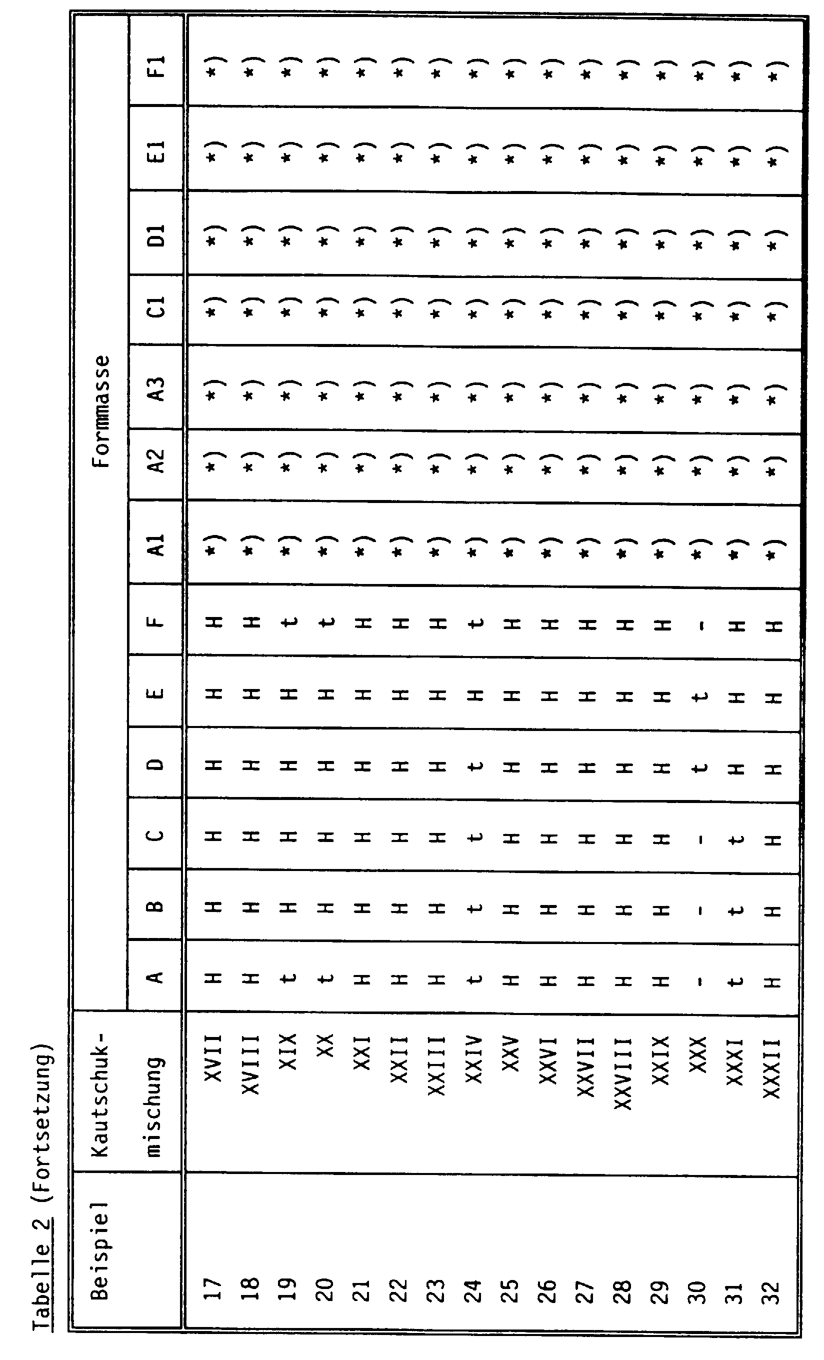

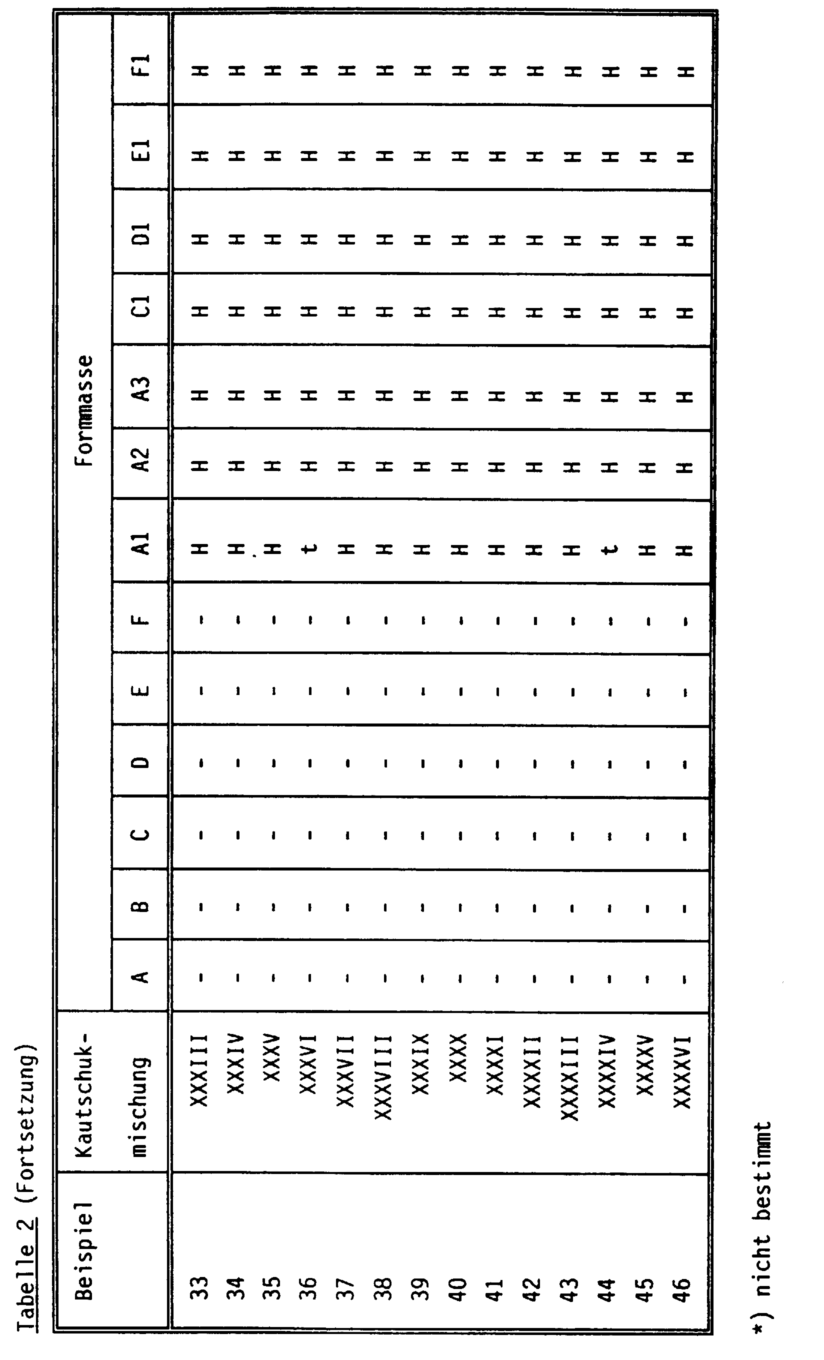

Das Beispiel 1 läßt erkennen, daß bei Verwendung von unfunktionalisiertem Kautschuk ohne Bismaleinimid kein fester Verbund erhalten wird. Geht man von diesem System aus und setzt der Kautschukmischung eine beträchtliche Menge an Bismaleinimid zu, so wird ebenfalls kein fester Verbund erhalten, wie das Beispiel 3 zeigt. Verwendet man andererseits einen funktionalisierten Kautschuk, verzichtet aber auf den Zusatz eines Bismaleinimids wie im Beispiel 2, so erhält man ebenfalls keine Verbundhaftung.

Während bei den Beispielen 4 bis 32 das Bismaleinimid in die Kautschukzusammensetzung eingearbeitet wird, wird es bei den Beispielen 33 bis 46 dem Thermoplasten zugegeben. Man erkennt, daß bei beiden Ausführungsformen gleichermaßen gute Ergebnisse erhalten werden. Wie das Beispiel 1 zeigt, kann in diesem Fall sogar mit Erfolg ein unfunktionalisierter Kautschuk verwendet werden.

## Patentansprüche

1. Verfahren zur Herstellung von Verbundgegenständen aus mindestens einer harten und mindestens einer weichen Komponente, wobei die harte Komponente auf einem thermoplastischen Polyester basiert und die weiche Komponente ein Vulkanisat ist,
dadurch gekennzeichnet,
daß das Vulkanisat unter üblichen Vulkanisationsbedingungen im Kontakt mit der harten Komponente durch Vulkanisation einer Kautschukzusammensetzung hergestellt wird, die folgende Komponenten enthält:
I. 100 Gew.-Teile eines Kautschuks,
II. 0 bis 300 Gew.-Teile Füllstoffe,
III. 1 bis 10 Gew.-Teile peroxidische Vulkanisationsmittel,
IV. 0 bis 4 Gew.-Teile Vulkanisationsaktivatoren,
V. 0 bis 150 Gew.-Teile Weichmacher,
dadurch gekennzeichnet, daß
a) wahlweise die harte und/oder die weiche Komponente zusätzlich 0,5 bis 12 Gew.-Teile eines di- oder polyfunktionellen Maleinimids der allgemeinen Formel 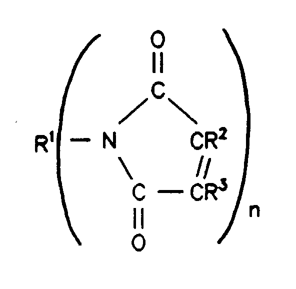 enthält,
wobei R¹ ein beliebiger zwei- oder mehrwertiger Rest oder eine direkte Bindung sein kann, während R² und R³, unabhängig voneinander, Wasserstoff, Alkyl, Cycloalkyl oder Aryl mit jeweils maximal 20 C-Atomen sein können; n steht für eine Zahl größer oder gleich 2, und
b) im Falle, daß die harte Komponente kein di- oder polyfunktionelles Maleinimid enthält, der Kautschuk Carboxyl- oder Säureanhydridgruppen besitzt.

2. Verfahren gemäß Anspruch 1,
dadurch gekennzeichnet,
daß die harte Komponente ein Polyester, eine Polyesterformmasse, ein Polyesterblend oder ein Faserverbundwerkstoff mit Polyestermatrix ist.

3. Verfahren gemäß einem der vorhergehenden Ansprüche,
dadurch gekennzeichnet,
daß die Dicarbonsäurekomponente des thermoplastischen Polyesters auf Terephthalsäure basiert.

4. Verfahren gemäß einem der vorhergehenden Ansprüche,
dadurch gekennzeichnet,
daß der thermoplastische Polyester aliphatische Doppelbindungen enthält.

5. Verfahren gemäß Anspruch 3,
dadurch gekennzeichnet,
daß die Diolkomponente zu 0 bis 99,9 Mol-% aus Butandiol-(1,4) und zu 0,1 bis 100 Mol-% aus Butendiol-(1,4), besteht.

6. Verfahren gemäß einem der vorhergehenden Ansprüche,
dadurch gekennzeichnet,
daß der carboxyl- oder anhydridgruppenhaltige Kautschuk während der Vulkanisation in situ hergestellt wird, indem ein unfunktionalisierter Kautschuk zusammen mit einer Verbindung eingesetzt wird, die mindestens eine C-C-Doppelbindung und/oder C-C-Dreifachbindung und mindestens eine Carboxyl- oder Anhydridgruppe enthält.

7. Verfahren gemäß einem der vorhergehenden Ansprüche,
dadurch gekennzeichnet,
daß der Kautschuk ein EP(D)M-Kautschuk, E-SBR, L-SBR, BR, NR, IR, IIR, CIIR, BIIR, NBR, CR, ein styrolhaltiges Blockcopolymer und/oder ein Polyalkenylen ist.

8. Verfahren gemäß einem der vorhergehenden Ansprüche,
dadurch gekennzeichnet,
daß der Kautschuk aus 30 bis 100 Gew.-Teilen eines EP(D)M-Kautschuks und 70 bis 0 Gew.-Teilen anderer Kautschuke besteht.

9. Verfahren gemäß einem der vorhergehenden Ansprüche,
dadurch gekennzeichnet,
daß als di- oder polyfunktionelles Maleinimid ein Bismaleinimid mit einem aromatischen Rest R¹ eingesetzt wird.

10. Verfahren gemäß einem der vorhergehenden Ansprüche,
dadurch gekennzeichnet,
daß das di- oder polyfunktionelle Maleinimid zu 1 bis 8 Gew.-Teilen eingesetzt wird.

11. Verfahren gemäß einem der vorhergehenden Ansprüche,
dadurch gekennzeichnet,
daß die Kautschukzusammensetzung darüber hinaus Vulkanisationsverzögerer, Alterungsschutzmittel, Verarbeitungshilfsmittel, Entformungsmittel und/oder Treibmittel enthält.

12. Verfahren gemäß einem der vorhergehenden Ansprüche,
dadurch gekennzeichnet,
daß der Verbund im einstufigen oder im zweistufigen Prozeß hergestellt wird, wobei die Massetemperatur der Kautschukmischung im Zylinder im Bereich zwischen 40 und 80 °C und die Vulkanisationstemperatur im Bereich zwischen 140 und 200 °C liegen.

13. Verbundgegenstände, hergestellt nach einem der vorhergehenden Ansprüche.

## Claims

1. A process for producing composite articles made of at least one hard and at least one soft component, where the hard component is based on a thermoplastic polyester and the soft component is a vulcanizate, characterized in that the vulcanizate is produced under conventional vulcanization conditions in contact with the hard component by vulcanization of a rubber composition which contains the following components:
I. 100 parts by weight of a rubber,
II. from 0 to 300 parts by weight of fillers,
III. from 1 to 10 parts by weight of peroxidic vulcanizers,
IV. from 0 to 4 parts by weight of vulcanization activators and
V. from 0 to 150 parts by weight of plasticizers,
characterized in that
a) the hard and/or the soft component, as desired, additionally contains from 0.5 to 12 parts by weight of a difunctional or polyfunctional maleimide of the general formula 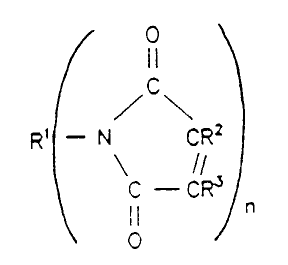 where R¹ can be any divalent or higher-valent radical or a direct bond, while R² and R³ can be, independently of one another, hydrogen, alkyl, cycloalkyl or aryl each having at most 20 carbon atoms; n is a number greater than or equal to 2, and
b) in the case of the hard component containing no difunctional or polyfunctional maleimide, the rubber possesses carboxyl or acid anhydride groups.

2. A process according to claim 1, characterized in that the hard component is a polyester, a polyester moulding composition, a polyester blend or a fibre composite material having a polyester matrix.

3. A process according to either of the preceding claims, characterized in that the dicarboxylic acid component of the thermoplastic polyester is based on terephthalic acid.

4. A process according to any one of the preceding claims, characterized in that the thermoplastic polyester contains aliphatic double bonds.

5. A process according to Claim 3, characterized in that the diol component comprises from 0 to 99.9 mol % of butane-1,4-diol and from 0.1 to 100 mol % of butene-1,4-diol.

6. A process according to any one of the preceding claims, characterized in that the rubber containing carboxyl or anhydride groups is prepared in situ during vulcanization by using a non-functionalized rubber together with a compound which contains at least one C-C double bond and/or C-C triple bond and at least one carboxyl or anhydride group.

7. A process according to any one of the preceding claims, characterized in that the rubber is an EP(D)M rubber, E-SBR, S-SBR, BR, NR, IR, IIR, CIIR, BIIR, NBR, CR, a styrene-containing block copolymer and/or a polyalkenylene.

8. A process according to any one of the preceding claims, characterized in that the rubber comprises from 30 to 100 parts by weight of an EP(D)M rubber and from 70 to 0 parts by weight of other rubbers.

9. A process according to any one of the preceding claims, characterized in that a bismaleimide containing an aromatic radical R¹ is used as the difunctional or polyfunctional maleimide.

10. A process according to any one of the preceding claims, characterized in that the difunctional or polyfunctional maleimide is used in an amount from 1 to 8 parts by weight.

11. A process according to any one of the preceding claims, characterized in that the rubber composition additionally contains vulcanization retarders, aging inhibitors, processing aids, mould release agents and/or blowing agents.

12. A process according to any one of the preceding claims, characterized in that the composite is produced in a single-stage or in a two-stage process in which the composition temperature of the rubber mixture in the barrel is in the range from 40 to 80°C and the vulcanization temperature is in the range from 140 to 200°C.

13. A composite article produced according to any one of the preceding claims.

## Revendications

1. Procédé de fabrication d'articles composites constitués d'au moins un composant dur et d'au moins un composant mou, le composant dur étant à base d'un polyester thermoplastique et le composant mou étant un produit de vulcanisation,
caractérisé en ce que
le produit de vulcanisation est fabriqué dans des conditions de vulcanisation habituelles au contact avec le composant dur par vulcanisation d'une composition de caoutchouc qui contient les composants suivants :
I. 100 parties en poids d'un caoutchouc,
Il. 0 à 300 parties en poids de charges,
III. 1 à 10 parties en poids d'un agent de vulcanisation peroxydique,
IV. 0 à 4 parties en poids d'activateurs de vulcanisation ainsi que
V. 0 à 150 parties en poids d'un plastifiant,
caractérisé en ce que
a) au choix le composant dur et/ou le composant mou contien(nen)t en outre de 0,5 à 12 parties en poids d'un maléinimide di- ou polyfonctionnel de formule générale 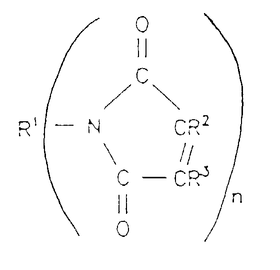 dans laquelle R¹ peut être un radical bi- ou polyvalent quelconque ou une liaison directe, tandis que R² ou R³, indépendamment l'un de l'autre, peuvent être un hydrogène, un alkyle, un cycloalkyle ou un aryle ayant à chaque fois au maximum 20 atomes de carbone ; n représente un nombre supérieur ou égal à 2, et
b) dans le cas où le composant dur ne contient pas de maléinimide di- ou polyfonctionnel, le caoutchouc possède des groupes carboxyles ou anhydrides d'acide.

2. Procédé selon la revendication 1,
caractérisé en ce que
le composant dur est un polyester, une matière moulable en polyester, un mélange de polyesters ou un matériau composite fibreux à matrice de polyester.

3. Procédé selon l'une des revendications précédentes,
caractérisé en ce que
le composant acide dicarboxylique du polyester thermoplastique est à base d'acide térephtalique.

4. Procédé selon l'une des revendications précédentes,
caractérisé en ce que
le polyester thermoplastique contient des doubles liaisons aliphatiques.

5. Procédé selon la revendication 3,
caractérisé en ce que
le composant diol se compose de 0 à 99,9% molaire de butanediol-(1,4) et de 0,1 à 100% molaire de butènediol-(1,4).

6. Procédé selon l'une des revendications précédentes,
caractérisé en ce que
le caoutchouc contenant des groupes carboxyle ou anhydride est fabriqué in situ pendant la vulcanisation, en utilisant un caoutchouc non fonctionnalisé avec un composé qui contient au moins une double liaison C-C et/ou une triple liaison C-C et au moins un groupe carboxyle ou anhydride.

7. Procédé selon l'une des revendications précédentes,
caractérisé en ce que
le caoutchouc est un caoutchouc EP(D)M, E-SBR, L-SBR, BR, NR, IR, IIR, CIIR, BIIR, NBR, CR, un copolymère séquencé contenant du styrène et/ou un polyalcénylène.

8. Procédé selon l'une des revendications précédentes,
caractérisé en ce que
le caoutchouc se compose de 30 à 100 parties en poids d'un caoutchouc EP(D)M et de 70 à 0 parties en poids d'autres caoutchoucs.

9. Procédé selon l'une des revendications précédentes,
caractérisé en ce qu'
on utilise comme maléinimide di- ou polyfonctionnel un bis-maléinimide ayant un radical aromatique R¹.

10. Procédé selon l'une des revendications précédentes,
caractérisé en ce que
le maléinimide di- ou polyfonctionnel est utilisé à raison de 1 à 8 parties en poids.

11. Procédé selon l'une des revendications précédentes,
caractérisé en ce que
la composition de caoutchouc contient en outre des agents retardant la vulcanisation, des agents de protection contre le vieillissement, des adjuvants de traitement, des agents de démoulage et/ou des agents porogènes.

12. Procédé selon l'une des revendications précédentes,
caractérisé en ce que
le composite est fabriqué dans un procédé en une étape ou en deux étapes, la température de la masse du mélange du caoutchouc dans le cylindre se situant dans un intervalle compris entre 40 et 80°C et la température de vulcanisation se situant dans un intervalle compris entre 140 et 200°C.

13. Articles composites fabriqué selon l'une des revendications précédentes.
